# EUROPÄISCHE PATENTSCHRIFT

(11) **EP 2 043 816 B1**
(45) Veröffentlichungstag und Bekanntmachung des Hinweises auf die Patenterteilung: **16.06.2010**
(21) Anmeldenummer: 07722537.3
(22) Anmeldetag: 20.06.2007
(51) Int. Cl.: B23Q 11/08, B27G 19/02, F16P 1/02

(54) **Holzbearbeitungsmaschine mit einer Splitterschutzvorrichtung**
Woodworking machine with a splinter protection device
Machine à bois avec un dispositif de protection anti-éclats

(30) Priorität: 26.07.2006 DE 102006034519
(43) Veröffentlichungstag der Anmeldung: 08.04.2009
(73) Patentinhaber: Raimann Holzoptimierung GmbH & Co. KG, 79108 Freiburg (DE)
(72) Erfinder: SEIBERT, Friedemann, 66484 Winterbach/Pfalz (DE); HERMLE, Anita, 79102 Freiburg (DE); HERRMANN, Rainer, 79234 Heitersheim (DE)
(74) Vertreter: RACKETTE Partnerschaft Patentanwälte
(86) Internationale Anmeldenummer: PCT/DE2007/001083
(87) Internationale Veröffentlichungsnummer: WO 2008/011856

(56) Entgegenhaltungen:
- DE-A1- 4 220 052
- DE-A1-102006 017 063
- US-A- 4 096 789
- US-A- 4 241 505

## Beschreibung

Die Erfindung betrifft eine Holzbearbeitungsmaschine mit in einer Förderrichtung arbeitenden Fördereinrichtung und mit einer Splitterschutzvorrichtung gemäß dem Oberbegriff des Anspruchs 1.

Bei Splitterschutzvorrichtungen für Holzbearbeitungsmaschinen insbesondere zum Sägen von Holzleisten aus einem Massivholzkörper im gewerblichen und industriellen Umfeld müssen Maßnahmen getroffen werden, um das Austreten von mitunter massiven, langen Spreißeln aus der Holzbearbeitungsmaschine entgegen der Einführrichtung des Massivholzkörpers zu verhindern. Hierfür sind häufig eine Anzahl von nebeneinander angeordneten, aus flachen Metallplatten hergestellte Fallenfinger vorgesehen, die in einem dem Massivholzkörper benachbarten Fußbereich zwei zueinander parallele, unterschiedlich lange Längsseiten, eine im Wesentlichen rechtwinklig zu den Längsseiten ausgerichtete Querseite sowie eine schräg zu den Längsseiten ausgerichtete Randseite aufweisen. Die Fallenfinger sind dabei um eine durch eine in einem Kopfbereich eingebrachte Lagerausnehmung der Fallenfinger durchgreifende Lagerachse schwenkbar. Im bestimmungsgemäßen Einsatz ist die lange Randseite dem Massivholzkörper zugewandt. Die Fallenfinger bieten somit Schutz gegen sich entgegen der Einführrichtung des Massivholzkörpers bewegende Gegenstände, da bei Auftreffen eines Gegenstandes auf den Fußbereich die Fallenfinger gegen den Massivholzkörper gedrückt werden und somit eine Sperre bilden.

Eine Holzbearbeitungsmaschine gemäß dem Oberbegiff des Anspruch 1 ist aus der US-A-4096789 bekannt. Nachteilig bei derartigen Fallenfinger aufweisenden Splitterschutzvorrichtungen ist jedoch, dass zwischen den einzelnen Fallenfingern beim Rückschlagen von größeren Spreißeln Spalte entstehen, durch die Spreißel durchtreten können.

Der Erfindung liegt die Aufgabe zugrunde, eine Splitterschutzvorrichtung mit einerHolzbearbeitungsmaschine zu schaffen, die einen hohen Schutz vor sich entgegen der Einführrichtung von durch die Holzbearbeitungsmaschine zu bearbeitenden Massivholzkörpern bewegenden Gegenständen bietet.

Diese Aufgabe wird bei einer Holzbearbeitungsmaschine gemäß Anspruch 1 gelöst.

Dadurch, dass bei der erfindungsgemäßen Holzbearbeitungsmaschine ergänzend oder auch alternativ zu Fallenfingern aus Metallplatten eine Streifenmatte aus einem flexiblen reißfesten Material mit seitlich gegeneinander versetzten Streifenfingern vorhanden ist, ist ein wirkungsvoller Schutz gegen sich entgegen der Einführrichtung von Massivholzkörpern bewegende Gegenstände erzielt, da beim Auftreffen dieser Gegenstände auf die Streifenmatte aufgrund deren Flexibilität und die relativ zueinander beweglichen Streifenfinger ein großer Teil der Bewegungsenergie der Gegenstände in die Streifenmatte dissipiert, ohne dass ein wesentlicher lmpulsübertrag mit der Folge einer unkontrollierten eigenen Bewegung der Streifenfinger erfolgt. Die Streifenfinger bewegen sich vielmehr schleifend verhältnismäßig träge entgegen die Einführrichtung, so dass die Undurchlässigkeit der einen Art mehrlagigen Vorhang bildenden Streifenmatte erhalten bleibt und auch einem ersten sich entgegen der Einführrichtung bewegenden Gegenstand unmittelbar nachfolgende Gegenstände zuverlässig abgehalten werden.

Bei einer zweckmäßigen Ausgestaltung einer erfindungsgemäßen Holzbearbeitungs vorrichtung verfügt die Streifenmatte als Lagen über eine Decklage und über eine Unterlage, wobei die Streifenfinger jeder Lage die gleiche Breite aufweisen und wobei die Streifenfinger der beiden Lagen um die halbe Breite der Streifenfinger seitlich versetzt sind. Dieser Ausgestaltung zeichnet sich durch einen besonders einfachen und daher kostengünstigen Aufbau aus.

Bei einer weiteren zweckmäßigen Ausgestaltung einer erfindungsgemäßen Holzbearbeitungs vorrichtung verfügt die Streifenmatte über eine Decklage, über eine Unterlage sowie über eine zwischen der Decklage und der Unterlage angeordnete Zwischenlage, wobei die Streifenfinger der Unterlage sowie der Zwischenlage die gleiche Breite aufweisen und um die halbe Breite ihrer Streifenfinger seitlich versetzt sind und wobei die Streifenfinger der Decklage die doppelte Breite der Streifenfinger der Unterlage beziehungsweise der Zwischenlage aufweisen, wobei die Streifenfinger der Decklage um die halbe Breite der Streifenfinger der Zwischenlage zu den Streifenfingern der Zwischenlage seitlich versetzt sind. Diese Ausgestaltung zeichnet sich bei einem noch wenig komplexen Aufbau durch eine verhältnismäßig hohe Schutzwirkung aus.

Bei einer weiteren zweckmäßigen Ausgestaltung einer erfindungsgemäßen Holzbearbeitungs vorrichtung weisen die Lagen der Streifenmatte eine in einer Förderrichtung zunehmende Breite der Streifenfinger auf. Dadurch ergibt sich insbesondere bei mehr als drei Lagen eine besonders hohe Schutzwirkung.

Vorteilhafterweise sind die Lagen der Streifenmatte aus einer in einer flexiblen Matrix eingebetteten Anordnung von Längsfasern und Querfasern aufgebaut. Dabei ist es zum Erhöhen der Reibung zwischen den Lagen besonders vorteilhaft, dass jede Lage außenseitig mit einer Beschichtung versehen ist, die einen gegenüber dem Material der Matrix höheren Reibungswiderstand aufweist.

Für ein effizientes Halten der Lagen sind diese vorteilhafterweise zwischen einer Befestigungsleiste und einer Deckleiste angeordnet. Dabei ist die Deckleiste zur Höhenverstellung bevorzugt mit sich in Längsrichtung der Streifenfinger erstreckenden Langlöchern ausgebildet.

Weitere zweckmäßige Ausgestaltungen und Vorteile der Erfindung sind Gegenstand der nachfolgenden Beschreibung von bevorzugten Ausführungsbeispielen mit Bezug auf die Figuren der Zeichnungen, bei denen
- Fig. 1: in einer Seitenansicht ein Ausführungsbeispiel einer Holzbearbeitungsmaschine mit einer Splitterschutzvorrichtung zeigt,
- Fig. 2: in einer perspektivischen Ansicht ein weiteres Ausführungsbeispiel einer Splitterschutzvorrichtung darstellt,
- Fig. 3: in einer perspektivischen, teilweise aufgerissenen Ansicht ein Ausführungsbeispiel einer Streifenmatte mit drei Lagen zeigt,
- Fig. 4: in einer teilweise aufgerissenen Ansicht ein weiteres Ausführungsbeispiel einer Streifenmatte mit zwei Lagen darstellt,
- Fig. 5: in einer teilweise aufgerissenen Ansicht ein weiteres Ausführungsbeispiel einer Streifenmatte mit sechs Lagen zeigt,
- Fig. 6: ein Schnitt durch eine Lage einer Streifenmatte ist und
- Fig. 7: eine perspektivische skizzenhafte Darstellung der Wirkungsweise einer Streifenmatte ist.

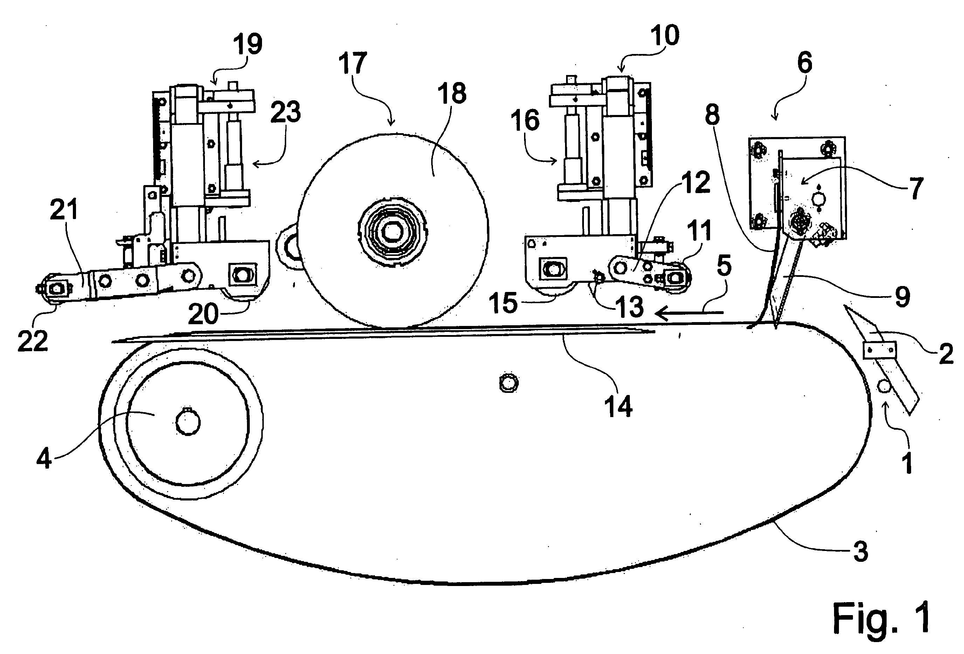

Fig. 1 zeigt in einer Seitenansicht ein Ausführungsbeispiel einer Holzbearbeitungsmaschine, die an ihrer Einführseite eine Einlaufrandfingeranordnung 1 aufweist, die über eine über die Zuführbreite der Holzbearbeitungsmaschine dicht nebeneinander angeordnete, spitzwinklig zulaufende Einlaufrandfinger 2 verfügt. Benachbart der Einlaufrandfingeranordnung 1 ist die Holzbearbeitungsmaschine mit einer schematisch dargestellten Förderkette 3 ausgestattet, die über eine Fördereinrichtung 4 in einer Förderrichtung 5 bewegbar ist.

In Förderrichtung 5 nach der Einlaufrandfingeranordnung 1 ist eine Splitterschutzvorrichtung 6 angeordnet, die über einen Splifterschutzträger 7 verfügt, an dem eine Streifenmatte 8 sowie über eine Anzahl von jeweils mit einer spitzen Eingriffskante ausgebildeten Fallenfinger 9 angebracht sind, die von der in Förderrichtung 5 hinteren Seite von der Streifenmatte 8 bedeckt sind.

In Förderrichtung 5 nach der Splitterschutzvorrichtung 6 ist die Holzbearbeitungsmaschine gemäß Fig. 1 mit einer Vorderandruckeinheit 10 ausgestattet, die in Förderrichtung 5 vorderseitig über eine drehbare Schwenkandruckwalze 11 verfügt, die über einen Schwenkarm 12 schwenkbar gelagert ist. In Förderrichtung 5 nach der Schwenkandruckwalze 11 ist die Vorderandruckeinheit 10 mit einem feststehenden Vollholzschutzfinger 13 ausgestattet, der in etwa rechtwinklig zu einer sich in einer in der Regel horizontal liegenden Bearbeitungsebene erstreckenden Auflageeinheit 14 ausgerichtet ist. In Förderrichtung 5 rückseitig ist die Vorderandruckeinheit 10 mit einer drehbaren Festandruckwalze 15 ausgestattet, die feststehend angeordnet ist. Schließlich weist die Vorderandruckeinheit 10 einen Hubmechanismus 16 auf, mit dem die Schwenkandruckwalze 11, der Vollholzschutzfinger 13 und die Festandruckwalze 15 in ihrer baulichen Gesamtheit in einer. Richtung rechtwinklig zu der Auflageeinheit 14 bewegbar ist.

In Förderrichtung 5 nach der Vorderandruckeinheit 10 ist die Holzbearbeitungsmaschine gemäß Fig. 1 mit einer Sägeeinheit 17 ausgestattet, die über eine Anzahl in einer Richtung quer zu der Längsrichtung der Auflageeinheit 14 verschiebbare Sägeblätter 18 aufweist. Mit den Sägeblättern 18 ist ein in Fig. 1 nicht dargestellter Massivholzkörper in Leisten zersägbar.

In Förderrichtung 5 nach der Sägeeinheit 17 verfügt die Holzbearbeitungsmaschine gemäß Fig. 1 über eine Rückandruckeinheit 19, die entsprechend der Vorderandruckeinheit 10 mit einer der Sägeeinheit 17 benachbarten drehbaren Festandruckwalze 20 sowie einer über einen Schwenkarm 21 schwenkbaren und ebenfalls drehbaren Schwenkandruckwalze 22 ausgestattet ist, die in ihrer Gesamtheit mittels eines Hubmechanismus 23 in einer Richtung rechtwinklig zu der Auflageeinheit 14 bewegbar sind.

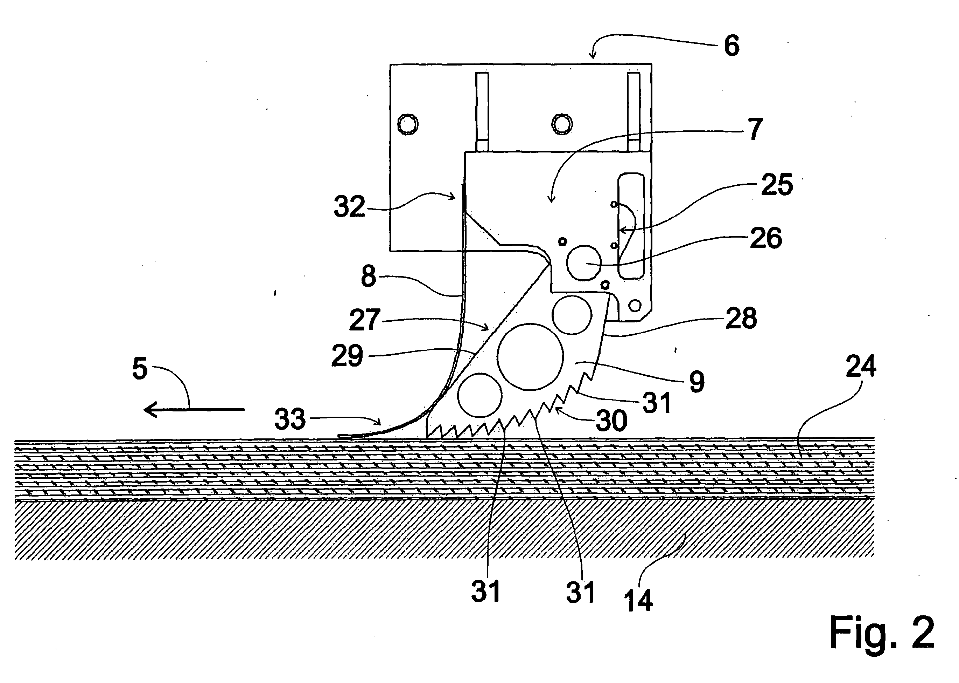

Fig. 2 zeigt in einer Seitenansicht den Splitterschutzträger 6 gemäß Fig. 1 mit gegenüber den beispielhaften Fallenfingern gemäß Fig. 1 abgewandelten Fallenfingern 9 zusammen mit einem zu bearbeitenden Massivholzkörper 24, der sich in der Förderrichtung 5 bewegt und dabei auf der Auflageeinheit 14 aufliegt. Aus Fig. 2 ist ersichtlich, dass die Fallenfinger 9 über einen Kopfabschnitt 25 verfügen, der in der Anordnung gemäß Fig. 2 in den Splitterschutzträger 7 hineinragt. In dem Kopfabschnitt 25 ist eine runde Lagerausnehmung angebracht, durch die eine zum Schwenken der Fallenfinger 9 entsprechend dimensionierte Lagerachse 26 durchgreift.

An den Kopfabschnitt 25 schließt sich ein Fußabschnitt 27 an, der aus dem Splitterschutzträger 7 austritt. Der Fußabschnitt 27 verfügt über eine kurze gerade Randseite 28 und über eine lange gerade Randseite 29, die mit zunehmenden Abstand von dem Kopfabschnitt 25 einen größer werdenden Abstand voneinander aufweisen, wobei sich die lange gerade Randseite 29 weiter in Richtung des Massivholzkörpers 24 als die kurze gerade Randseite 28 erstreckt.

Zwischen den von dem Kopfabschnitt 25 abgewandten Enden der geraden Randseite 28, 29 erstreckt sich ein konvexer Bogenrand 30, der mit einer Anzahl von sägezahnartig ausgebildeten Erhebungen 31 als Eingriffstruktur ausgestattet ist, die über die gesamte Länge des Bogenrandes 30 angeordnet und mit ihren Mittelsymmetrielinien rechtwinklig auf die Tangente des Bogenrandes 30 im dem Scheitel gegenüberliegenden Basisbereich der betreffenden Erhebung 31 ausgerichtet sind.

Aus Fig. 2 ist ersichtlich, dass durch die konvexe, vorzugsweise einer Evolventen in Gestalt der Abrollkontur eines Rechtecks auf einer bewegten Fläche entsprechende Ausgestaltung des Bogenrandes 30 selbst bei sich über einen großen Bereich ändernden Dicken des Massivholzkörpers 24 der Winkel zwischen der dem Fallenfinger 9 zugewandten Seite des Massivholzkörpers 24 sowie der Verbindungslinie zwischen der Mitte der Lagerachse 26 und dem Scheitel der der Oberfläche des Massivholzkörpers 24 nächstbenachbarten Erhebung 31 zwischen mindestens 55 Grad und höchstens 80 Grad liegt. Dadurch ist sichergestellt, dass bei einer unbeabsichtigten Bewegung des Massivholzkörpers 24 entgegen der Förderrichtung 5 beispielsweise durch Rückschlag beim Sägevorgang ein zuverlässiger Eingriff der Erhebungen 31 mit dem Massivholzkörper 24 sichergestellt ist.

Weiterhin lässt sich Fig. 2 entnehmen, dass durch die in Richtung des Bogenrandes 30 divergierende Anordnung der geraden Randseiten 28, 29 der Fußabschnitt 27 verhältnismäßig großflächig ausgebildet ist, so dass selbst im Falle des Anhebens eines Fallenfingers 9 durch Auftreffen eines Spreißels mit einem hohen Impuls eine ausreichende, in der Regel sogar vollständige Überdeckung der Fallenfinger 9 erhalten bleibt, ohne dass sicherheitsrelevante Lücken zwischen den Fallenfingern 9 entstehen.

Vorzugsweise sind die Fallenfinger 9 aus flachen Metallplatten gefertigt, in denen Ausnehmungen ausgebildet sind, in die Kunststoffeinsätze eingebracht sind. Dadurch ergibt sich frei von Beeinträchtigungen in der Sicherheit ein gegenüber einem Vollmaterial geringeres Gewicht der Fallenfinger 9.

Weiterhin läßt sich Fig. 2 entnehmen, dass die mit einem Befestigungsende 32 an dem Splitterschutzträger 7 angebrachte Streifenmatte 8 wie ein Vorhang von der dem Splitterschutzträger 7 herunter hängt, an dem dem Massivholzkörper 24 benachbarten Ende des Fußabschnittes 27 der Fallenfinger 9 anliegt und mit einem Schleppende 33 in Förderrichtung 5 über die Fallenfinger 9 übersteht sowie auf dem Massivholzkörper 24 aufliegt.

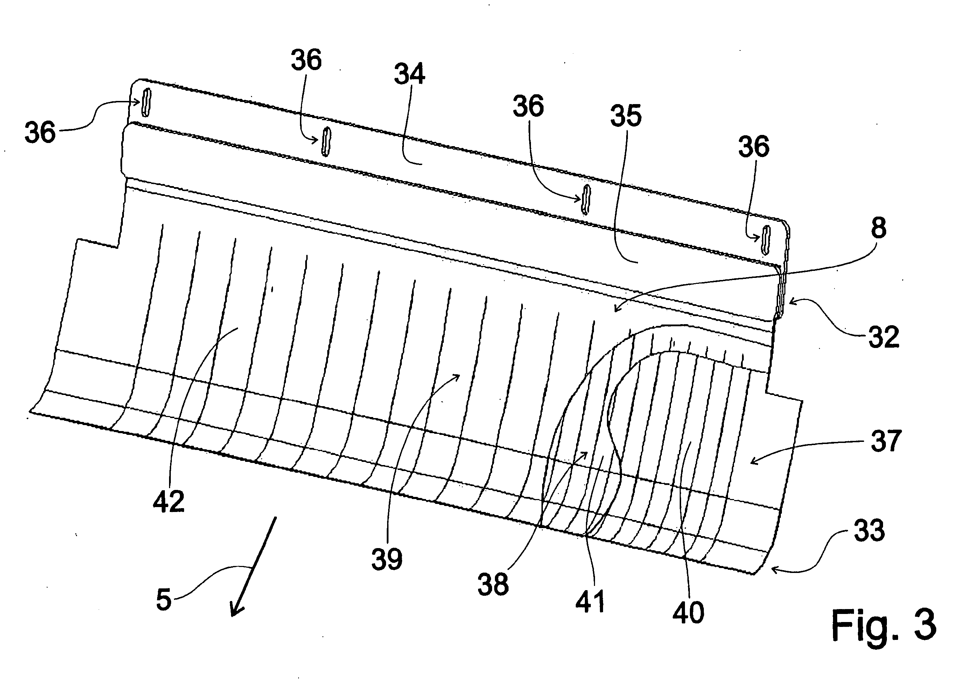

Fig. 3 zeigt in einer perspektivischen, teilweise aufgerissenen Ansicht ein Ausführungsbeispiel einer Streifenmatte 8. Aus Fig. 3 ist ersichtlich, dass die Streifenmatte 8 an ihrem Befestigungsende 32 zwischen einer sich in Querrichtung der Streifenmatte 8 erstreckenden Befestigungsleiste 34 und einer Deckleiste 35 eingespannt ist. Die Befestigungsleiste 34 verfügt über eine Anzahl von sich in Längsrichtung der Streifenmatte 8 erstreckende Langlöcher 36, so dass das Befestigungsende 32 der Streifenmatte 8 bei einer Anordnung gemäß Fig. 2 in Abhängigkeit der Abnutzung des Schleppendes 33 in unterschiedlichen Höhen bezüglich eines Massivholzkörpers 24 angeordnet werden kann.

Weiterhin läßt sich Fig. 3 entnehmen, dass die in Fig. 3 dargestellte beispielhafte Streifenmatte 8 als Lagen über eine in Förderrichtung 5 vorderseitige Unterlage 37, eine in Förderrichtung 5 nachfolgende Zwischenlage 38 sowie eine in Förderrichtung der Zwischenlage 38 nachgeordnete Decklage 39 aufweist. Die Unterlage 37 und die Zwischenlage 38 sind mit einer Anzahl von durch Schneiden der Unterlage 37 beziehungsweise der Zwischenlage 38 in Längsrichtung der Streifenmatte 8 von dem schleppende 33 in Richtung des Befestigungsendes 32 ausgebildeten Streifenfingern 40, 41 ausgestattet, die eine jeweils gleiche Breite aufweisen, wobei die Streifenfinger 40 der Unterlage 37 gegenüber den Streifenfingern 41 der Zwischenlage 38 um die halbe Breite der Streifenfinger 40, 41 der Unterlage 37 beziehungsweise der Zwischenlage 38 seitlich versetzt angeordnet sind. Die Decklage 39 ist ebenfalls mit entsprechend den Streifenfinger 40, 41 der Unterlage 37 beziehungsweise der Zwischenlage 38 verlaufenden Streifenfingern 42 ausgebildet, wobei die Streifenfinger 42 der Decklage 39 die doppelte Breite der Streifenfinger 40, 41 der Unterlage 37 beziehungsweise der Zwischenlage 38 aufweisen. Die Streifenfinger 42 der Decklage 39 sind um die halbe Breite der Streifenfinger 40, 41 der Unterlage 37 beziehungsweise der Zwischenlage 38 seitlich versetzt zu den Streifenfingern 41 der zwischen der Unterlage 37 und der Decklage 39 liegenden Zwischenlage 38 angeordnet.

Dadurch ergibt sich bei dem Ausführungsbeispiel einer Streifenmatte 8 gemäß Fig. 3 bei einer wirtschaftlichen Herstellung ein sehr gute Splitterschutz aufgrund der zweifachen Überdeckungen der Schnitte zwischen den Streifenfingern 40 der Unterlage 37 durch die Streifenfinger 41 der Zwischenlage 38 und die Streifenfinger 42 der Decklage 39 sowie der einfachen Überdeckung der Schnitte zwischen den Streifenfingern 41 der Zwischenlage 38 durch die Streifenfinger 42 der Decklage 39.

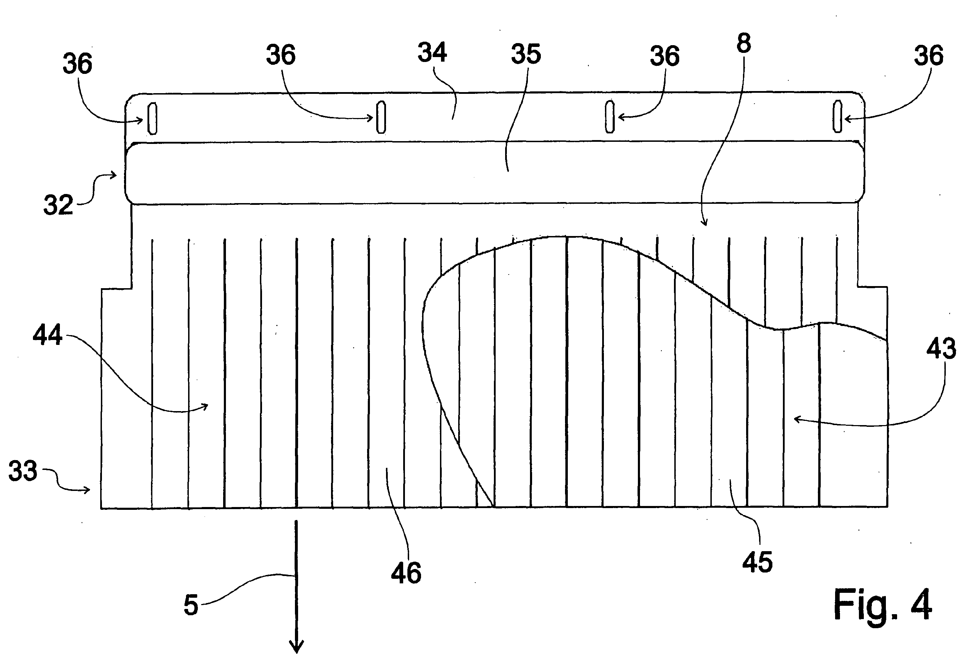

Fig. 4 zeigt in einer teilweise aufgerissenen Seitenansicht ein weiteres Ausführungsbeispiel einer Streifenmatte 8, die als Lagen mit einer Unterlage 43 und einer Decklage 44 ausgebildet ist. Die Unterlage 43 und die Decklage 44 weisen bei dem Ausführungsbeispiel gemäß Fig. 4 entsprechend dem Ausführungsbeispiel gemäß Fig. 3 bei der Unterlage 37 und der Zwischenlage 38 Streifenfinger 45, 46 mit jeweils gleicher Breite auf, die um die halbe Breite der Streifenfinger 45, 46 seitlich versetzt angeordnet sind. Auch bei diesem sehr wirtschaftlich herstellbaren und zur Nachrüstung vorteilhaften Ausführungsbeispiel ergibt sich durch die Überdeckung der Schnitte zwischen den Streifenfingern 45 der Unterlage 43 durch die Streifenfinger 46 der Decklage 44 durch die Abdeckung der Fallenfinger 9 eine deutliche Steigerung der Betriebssicherheit einer mit einer derartigen Streifenmatte 8 ausgestatteten Holzbearbeitungsmaschine.

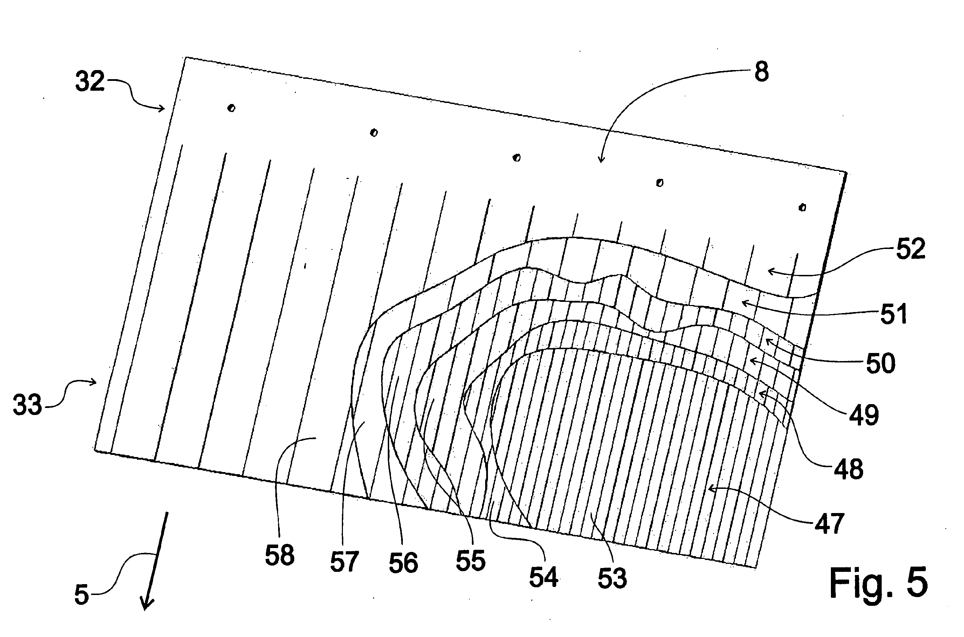

Fig. 5 zeigt in einer teilweise aufgerissenen Ansicht ein Ausführungsbeispiel mit einer Streifenmatte 8, die bei diesem Ausführungsbeispiel insgesamt sechs Lagen 47, 48, 49, 50, 51, 52 mit Streifenfingern 53, 54, 55, 56, 57, 58 aufweist, wobei die Breiten der Streifenfinger 53 bis 58 der Lagen 47 bis 52 in Förderrichtung 5 kontinuierlich zunehmen und so seitlich versetzt angeordnet sind, dass jeder Schnitt zwischen Streifenfingern 53 bis 57 von abgedeckten Lagen 47 bis 51 durch Streifenfinger 54 bis 58 aller in Förderrichtung 5 nachgeordneten Lagen 48 bis 52 überdeckt sind. Dadurch ist ein besonders hoher Splitterschutz erzielt.

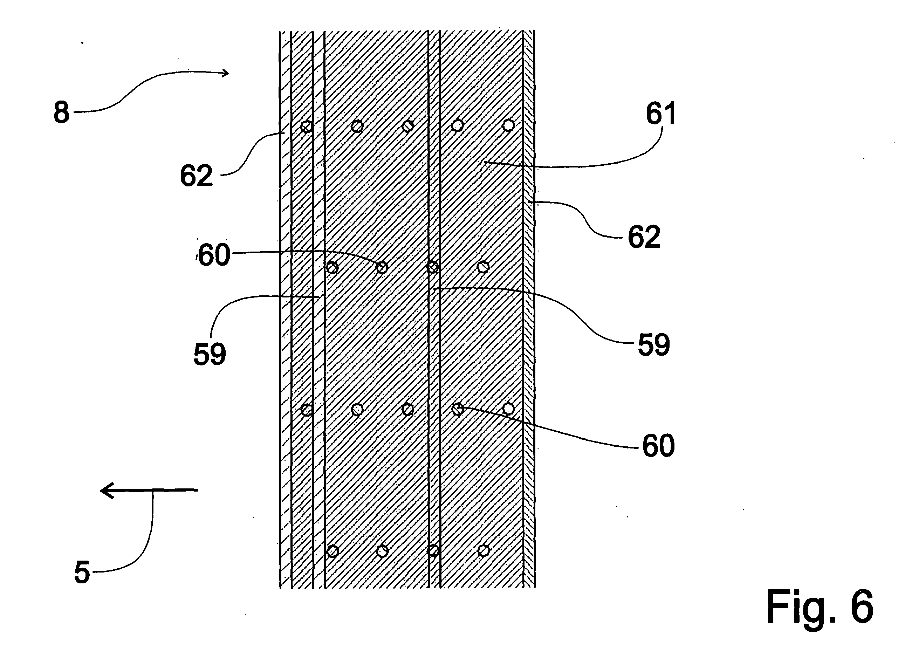

Fig. 6 zeigt einen Schnitt durch eine Lage eines Ausführungsbeispieles einer Streifenmatte 8. Die Lage gemäß Fig. 6 ist aus sich längs der Schnitte zwischen Streifenfingern erstreckenden Längsfasern 59 aus Glasfasern und/oder Kohlefasern und hierzu quer ausgerichteten Querfasern 60 aus Glasfasern und/oder Kohlefasern aufgebaut, die in einer Matrix 61 aus einem für eine ausreichende Biegsamkeit der Streifenmatte 8 zum Ausbilden des Schleppendes 33 ausreichend flexiblen und möglichst abriebsfesten sowie reißfesten Material eingebettet sind. Um die Reibung zwischen benachbarten Lagen und damit die Dissipation der Energie von entgegen der Förderrichtung 5 auf die Streifenmatte 8 auftretenden Gegenständen zu erhöhen sowie ein Durchschlagen der Streifenmatte 8 mit einer Anordnung des Schleppendes 33 in Förderrichtung 5 vor dem Befestigungsende 32 insbesondere im seitlichen Randbereich der Förderkette 3 zu vermeiden, sind die Außenseiten der Lagen mit Beschichtungen 62 aus einem Material versehen, dessen Reibungswiderstand höher als der Reibungswiderstand des Materiales der Matrix 61 ist.

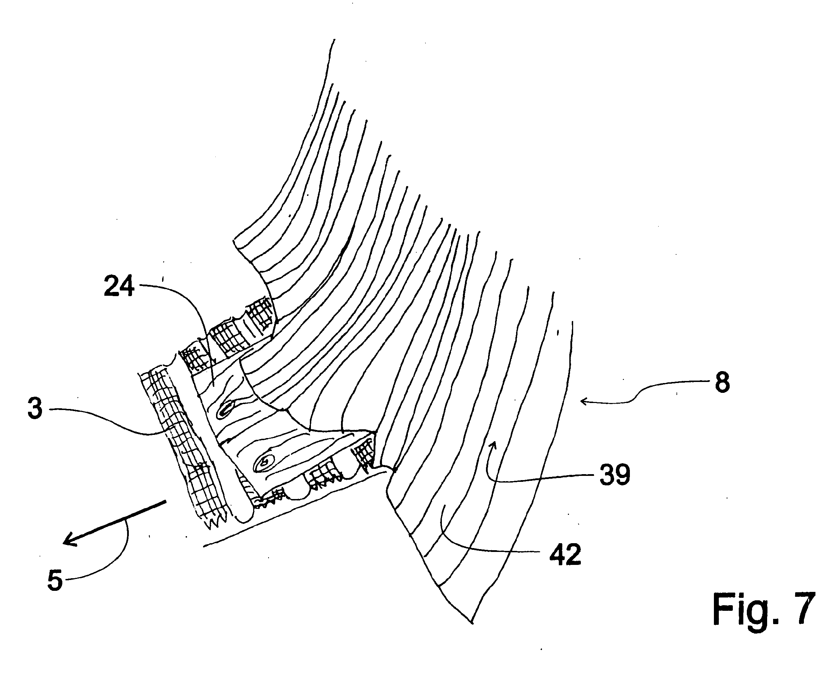

Fig. 7 ist eine perspektivische skizzenhafte Darstellung der Wirkungsweise einer Streifenmatte 8 beispielsweise gemäß Fig. 3 mit Blick auf die Decklage 39. Aus Fig. 7 ist ersichtlich, dass sich die Streifenfinger 40, 41, 42 der Unterlage 37, der Zwischenlage 38 sowie der Decklage 39 flexibel an die Kontur eines auf der Förderkette 3 in Förderrichtung 5 bewegten Massivholzkörpers 24 anpassen und diesen insbesondere auch an den Randseiten spaltfrei umschließen, so dass auch in diesen kritischen Bereichen sich entgegen der Förderrichtung 5 bewegende Gegenstände durch die Streifenmatte 8 abgestoppt werden und nicht aus einer mit der Streifenmatte 8 ausgestatteten Holzbearbeitungsmaschine austreten können.

## Patentansprüche

1. Holzbearbeitungsmaschine mit einer in einer Förderrichtung (5) arbeitenden Fördereinrichtung (4) und mit einer Splitterschutzvorrichtung (6), die eine sich in einer Richtung quer zu der Förderrichtung (5) erstreckende Streifenmatte (8) aus einem flexiblen reißfesten Material (59, 60, 61, 62) aufweist, die wie ein Vorhang herunter hängt und mit einem Schleppende (33) auf einem zu bearbeitenden, sich in der Förderrichtung (5) bewegenden Holzkörper (24) aufliegt sowie sich an dessen Kontur anpasst, **dadurch gekennzeichnet, daß** die Streifenmatte (8) über wenigstens zwei Lagen (37 bis 39; 43, 44; 47 bis 52) mit einer Anzahl von Streifenfingern (40 bis 42; 45, 46; 53 bis 58) verfügt und wobei die Streifenfinger (40 bis 42; 45, 46; 53 bis 58) benachbarter Lagen (37 bis 39; 43, 44; 47 bis 52) seitlich gegeneinander versetzt sind.

2. Holzbearbeitungsmaschine nach Anspruch 1, dass die Streifenmatte (8) als Lagen über eine Decklage (44) und über eine Unterlage (43) verfügt, wobei die Streifenfinger (45, 46) jeder Lage (43, 44) die gleiche Breite aufweisen und wobei die Streifenfinger (45, 46) der beiden Lagen (43, 44) um die halbe Breite der Streifenfinger (45, 46) seitlich versetzt sind.

3. Holzbearbeitungsmaschine nach Anspruch 1, **dadurch gekennzeichnet, dass** die Streifenmatte (8) über eine Decklage (39), über eine Unterlage (37) sowie über eine zwischen der Decklage (39) und der Unterlage (37) angeordnete Zwischenlage (38) verfügt, wobei die Streifenfinger (40, 41) der Unterlage (37) sowie der Zwischenlage (39) die gleiche Breite aufweisen und um die halbe Breite ihrer Streifenfinger (40, 41) seitlich versetzt sind und wobei die Streifenfinger (42) der Decklage (39) die doppelte Breite der Streifenfinger (40, 41) der Unterlage (37) beziehungsweise der Zwischenlage (38) aufweisen, wobei die Streifenfinger (42) der Decklage (39) um die halbe Breite der Streifenfinger (41) der Zwischenlage (38) zu den Streifenfingern (41) der Zwischenlage (39) seitlich versetzt sind.

4. Holzbearbeitungsmaschine nach Anspruch 1, **dadurch gekennzeichnet, dass** die Lagen (47 bis 52) der Streifenmatte (8) eine in einer Förderrichtung (5) zunehmende Breite der Streifenfinger (53 bis 58) aufweisen.

5. Holzbearbeitungsmaschine nach einem der Ansprüche 1 bis 4, **dadurch gekennzeichnet, dass** die Lagen (37 bis 39; 43, 44; 47 bis 52) der Streifenmatte (8) eine in einer Förderrichtung (5) zunehmende Breite der Streifenfinger (40 bis 42; 45, 46; 53 bis 58) aufweisen.

6. Holzbearbeitungsmaschine nach einem der Ansprüche 1 bis 5, **dadurch gekennzeichnet, dass** die Lagen (37 bis 39; 43, 44; 47 bis 52) der Streifenmatte (8) aus einer in einer flexiblen Matrix (61) eingebetteten Anordnung von Längsfasern (59) und Querfasern (60) aufgebaut sind.

7. Holzbearbeitungsmaschine nach Anspruch 6, **dadurch gekennzeichnet, dass** jede Lage (37 bis 39; 43, 44; 47 bis 52) außenseitig mit einer Beschichtung (62) versehen ist, die einen gegenüber dem Material der Matrix (61) höheren Reibungswiderstand aufweist.

8. Holzbearbeitungsmaschine nach einem der Ansprüche 1 bis 7, **dadurch gekennzeichnet, dass** die Lagen (37 bis 39; 43, 44; 47 bis 52) zwischen einer Befestigungsleiste (34) und einer Deckleiste (35) angeordnet sind.

9. Holzbearbeitungsmaschine nach Anspruch 8, **dadurch gekennzeichnet, dass** die Befestigungsleiste (34) mit sich in Längsrichtung der Streifenfinger (40 bis 42; 45, 46; 53 bis 58) erstreckenden Langlöchern (36) ausgebildet ist.

## Claims

1. Woodworking machine with a transport device (4) operating in a transport direction (5) and with a splinter protection device (6) which has a strip mat (8) which extends in a direction transverse to the transport direction (5) and comprises a flexible strong material (59, 60, 61, 62) and which hangs down like a curtain and rests with a trailing end (33) on a wood body (24) to be processed and moving in the transport direction (5) and adapts to the contour thereof, **characterized in that** the strip mat (8) has at least two layers (37 to 39; 43, 44; 47 to 52) with a number of strips (40 to 42; 45, 46; 53 to 58), the strips (40 to 42; 45, 46; 53 to 58) of adjacent layers (37 to 39; 43, 44; 47 to 52) being offset laterally relative to one another.

2. Woodworking machine according to Claim 1, **characterized in that** the strip mat (8) has a cover layer (44) and a bottom layer (43) as layers, the strips (45, 46) of each layer (43, 44) having the same width and the strips (45, 46) of the two layers (43, 44) being laterally offset by half the width of the strips (45, 46).

3. Woodworking machine according to Claim 1, **characterized in that** the strip mat (8) has a cover layer (39), a bottom layer (37) and an intermediate layer (38) arranged between the cover layer (39) and the bottom layer (37), the strips (40, 41) of the bottom layer (37) and of the intermediate layer (39) having the same width and being laterally offset by half the width of their strips (40, 41), and the strips (42) of the cover layer (39) having twice the width of the strips (40, 41) of the bottom layer (37) or of the intermediate layer (38), the strips (42) of the cover layer (39) being laterally offset by half the width of the strips (41) of the intermediate layer (38) relative to the strips (41) of the intermediate layer (39).

4. Woodworking machine according to Claim 1, **characterized in that** the layers (47 to 52) of the strip mat (8) have a width of the strips (53 to 58) which increases in a transport direction (5).

5. Woodworking machine according to any of Claims 1 to 4, **characterized in that** the layers (37 to 39; 43, 44; 47 to 52) of the strip mat (8) have a width of the strips (40 to 42; 45, 46; 53 to 58) which increases in a transport direction (5).

6. Woodworking machine according to any of Claims 1 to 5, **characterized in that** the layers (37 to 39; 43, 44; 47 to 52) of the strip mat (8) are composed of an arrangement of longitudinal fibres (59) and transverse fibres (60) which is embedded in a flexible matrix (61).

7. Woodworking machine according to Claim 6, **characterized in that** each layer (37 to 39; 43, 44; 47 to 52) is provided on the outside with a coating (62) which has a higher frictional resistance than the material of the matrix (61).

8. Woodworking machine according to any of Claims 1 to 7, **characterized in that** the layers (37 to 39; 43, 44; 47 to 52) are arranged between a fastening strip (34) and a cover strip (35).

9. Woodworking machine according to Claim 8, **characterized in that** the fastening strip (34) is formed with slots (36) extending in the longitudinal direction of the strips (40 to 42; 45, 46; 53 to 58).

## Revendications

1. Machine pour le travail du bois comportant un dispositif de transport (4) travaillant dans une direction de transport (5) et un dispositif de protection contre les copeaux (6) comportant un rideau à lamelles (8) formé d'un matériau flexible résistant au déchirement (59, 60, 61, 62) disposé perpendiculairement à la direction de transport (5), qui pend vers le bas à la manière d'un rideau et ayant une traîne (33) qui repose sur une pièce en bois (24) à usiner qui se déplace dans la direction de transport (5) et qui s'adapte à son contour, **caractérisé en ce que** le rideau à lamelles (8) est disposé sur au moins deux couches (37 à 39; 43; 44; 47 à 52) et comporte une pluralité de lamelles (40 à 42; 45; 46; 53 à 58) et **en ce que** les lamelles (40 à 42; 45; 46; 53 à 58) de couches adjacentes (37 à 39; 43; 44; 47 à 52) sont décalées latéralement les unes par rapport aux autres.

2. Machine pour le travail du bois selon la revendication 1, **caractérisée en ce que** le rideau à lamelles (8) est disposé en couches selon une couche supérieure (44) et une couche inférieure (43), dans lequel les lamelles (45, 46) de chaque couche ont la même largeur et dans lequel les lamelles des deux couches (43, 44) sont décalées latéralement de la moitié de la largeur des lamelles (45, 46).

3. Machine pour le travail du bois selon la revendication 1, **caractérisée en ce que** le rideau à lamelles (8) est disposé selon une couche supérieure (39), selon une couche inférieure (37) et selon une couche intermédiaire (38) disposée entre la couche supérieure (39) et la couche inférieure (37), dans lequel les lamelles (40, 41) de la couche inférieure (37) et de la couche intermédiaire (39) ont la même largeur et sont décalées latéralement de la moitié de la largeur de leurs lamelles (40, 41), et dans lequel les lamelles (42) de la couche supérieure (39) ont une largeur double de celle des lamelles (40, 41) de la couche inférieure (37), respectivement de la couche intermédiaire (38), dans lequel les lamelles (42) de la couche supérieure (39) sont décalées de la moitié de la largeur des lamelles (41) de la couche intermédiaire (38) en direction des lamelles (41) de la couche intermédiaire (39).

4. Machine pour le travail du bois selon la revendication 1, **caractérisée en ce que** les couches (47 à 52) du rideau à lamelles (8) ont une largeur de lamelles qui augmente dans la direction de transport (5).

5. Machine pour le travail du bois selon l'une quelconque des revendications 1 à 4, **caractérisée en ce que** les couches (37 à 39; 43; 44; 47 à 52) du rideau à lamelles (8) ont une largeur de lamelles qui augmente dans la direction de transport (5). (8)

6. Machine pour le travail du bois selon l'une quelconque des revendications 1 à 5, **caractérisée en ce que** les couches (37 à 39; 43; 44; 47 à 52) du rideau à lamelles (8) sont formées de fibres longitudinales (59) et de fibres transversales (60) moulées dans une matrice flexible.

7. Machine pour le travail du bois selon la revendication 6, **caractérisée en ce que** chaque couche (37 à 39; 43; 44; 47 à 52) comporte un revêtement extérieur ayant une résistance au frottement plus grande à celle du matériau de la matrice.

8. Machine pour le travail du bois selon l'une quelconque des revendications 1 à 7, **caractérisée en ce que** les couches (37 à 39; 43; 44; 47 à 52) sont placées entre une baguette de fixation (34) et une baguette de recouvrement (35).

9. Machine pour le travail du bois selon la revendication 8, **caractérisée en ce que** la baguette de fixation (34) comporte des trous oblongs (36) qui s'étendent dans la direction des lamelles (40 à 42; 45; 46; 53 à 58).
